# EUROPEAN PATENT SPECIFICATION

(11) **EP 4 343 159 B1**
(45) Date of publication and mention of the grant of the patent: **29.01.2025**
(21) Application number: 22197294.6
(22) Date of filing: 23.09.2022
(51) Int. Cl.: F16B 21/18

(54) **FASTENING DEVICE FOR FASTENING A MECHANICAL ELEMENT WITH A SUPPORT STRUCTURE AS WELL AS FASTENING SYSTEM**
BEFESTIGUNGSVORRICHTUNG ZUR BEFESTIGUNG EINES MECHANISCHEN ELEMENTS MIT EINER TRAGSTRUKTUR SOWIE BEFESTIGUNGSSYSTEM
DISPOSITIF DE FIXATION POUR FIXER UN ÉLÉMENT MÉCANIQUE À UNE STRUCTURE DE SUPPORT AINSI QUE SYSTÈME DE FIXATION

(43) Date of publication of application: 27.03.2024
(73) Proprietor: Airbus Operations GmbH, 21129 Hamburg (DE)
(72) Inventor: Benthien, Hermann, 21129 Hamburg (DE); Poppe, Andreas, 21129 Hamburg (DE); Benthien, Stefan, 21129 Hamburg (DE)
(74) Representative: Isarpatent

(56) References cited:
- US-A1- 2016 018 088

## Description

The invention relates to a fastening device for fastening a mechanical element with a support structure. The invention is furthermore concerned with fastening system containing such a fastening device.

Modern vehicles such as aircraft and spacecraft are manufactured in sections, that are pre-assembled. For attaching further components to those sections attachment systems are needed. Especially in the field of aircraft and spacecraft a high precision in manufacturing is important.

Further, the interior lining of aircraft is generally composed of individual elements, in which substantially plates or panels are placed adjacent to each other in a given framework or support structure. These plates or panels serve for example as cabin fitting elements.

Nevertheless, each section and component or plate/panel of the aircraft has different manufacturing tolerances, which are to match during assembly processes.

For example, document US 2015/0125235 A1 describes an attachment device for attaching at least one element to a section of a component. Furthermore, in document US 11,060,545 B2 a fastening system for securing a component is described.

From US 2016/018088 A1 there is known a connecting device for light fixtures.

Aspects of the invention may provide solutions for an alternative fastening device for fastening mechanical elements to support structures.

According to the invention, this problem is solved in each case by the subject matters of the independent claims.

According to a first aspect of the invention, a fastening device for fastening a mechanical element with a support structure is provided. In particular, a fastening device for fastening a cabin fitting element to a frame of an aircraft is provided. The fastening device comprises an enclosure, which is mountable to the support structure, and a locator bush, which is housed in the enclosure, wherein the locator bush is slidable along a longitudinal axis of the fastening device in relation to the enclosure in an unlocked position of the fastening device. Furthermore, the fastening device comprises a retaining element, which is positioned at least sectionwise around the longitudinal axis in the enclosure and mechanically coupled to the locator bush. The fastening device further comprises a locking bolt, which has a bolt head for mounting the mechanical element between the bolt head and the enclosure, wherein the locking bolt is configured to be slidable into the locator bush. Further the locking bolt has a recess, which is located on at least a section of the shell surface of the locking bolt and configured to be positively-locking connectable with the retaining element.

According to a second aspect of the invention, a fastening system is provided. The fastening system comprises a support structure and a fastening device according to the invention, wherein the enclosure is mounted to the support structure. Furthermore, the fastening system comprises a mechanical element, which is positively-locking connected with the fastening device.

A fundamental concept of the invention is to attaching a blind fastening device for high load introduction on a limited space of the support structure. The fastening system is installed by pushing the locking bolt into the enclosure, wherein the enclosure is mounted at a predetermined position on the support structure. The locking bolt passes through an opening of the mechanical element for having a positively-locking connection, wherein the bolt head has greater outer dimensions than the opening of the mechanical element such that the positively-locking connection works between the bolt head and the enclosure. In a locked position of the fastening device, the retaining element limits the movability of the locking bolt in the longitudinal axis of the fastening device in relation to the enclosure. Thereby, the fastening device works as a snap and click mechanism.

A particular advantage in the solution according to an aspect of the invention is that manufacturing efforts for assembling cabin fitting elements with the frame of the aircraft is reduced. Furthermore, the fastening device can be used for attaching a primary structure interface to the support structure with combining an inplane tolerance compensation of the manufacturing tolerances of the support structure. Therefore, further attachments, which are tolerance sensitive, can be attached to the primary structure interface. A guided installation of the mechanical element can lead to an automated tolerance compensation when mounted with the fastening device.

Advantageous embodiments and further developments emerge from the description with reference to the figures.

According to some aspects of the fastening device according to the invention, the retaining element is fixed in relation to the enclosure along the longitudinal axis and movable perpendicular to the longitudinal axis. That means the retaining element has a fixed orientation while it can be moved laterally in relation to the longitudinal axis. Thus, the retaining element can be used as a fixation element until a final fixation of the locking bolt, for example. Furthermore, a direct load transfer of the mechanical element into the support structure, in particular in the longitudinal axis, can be improved.

According to some further aspects of the fastening device according to the invention, the locator bush is configured to bring the retaining element into engagement with the recess of the locking bolt in a locked position of the fastening device. As a result, once the locked position is reached the locking bolt is mechanically connected to the enclosure/support structure. Thereby, only in the locked position of the fastening device the locking bolt is connected properly. In the unlocked position the locking bolt can be inserted without mechanical resistance. Therefore, for example, pulling back the locking bolt can test, if the fastening device is in the locked position.

According to some further aspects of the fastening device according to the invention, the recess of the locking bolt is circumferential around the shell surface of the locking bolt. The circumferential recess would not only apply to a cylindrical locking bolt, but also to a cuboid or a mixed form of locking bolts. Thereby, the circumferential recess extends in a peripheral direction around the shell surface of the locking bolt, irrespective of the shape of the locking bolt. Alternatively or additionally, the recess of the locking bolt has a rectangular, a triangular, a curved or a combination thereof cross-sectional shape. The retaining element has a mutually adapted shape.

According to some further aspects the fastening device further comprises a positioning element, which is fixed to the enclosure and configured to block a movement of the retaining element along the longitudinal axis in relation to the enclosure. Thus, preparing the enclosure or the fastening device for mounting to the support structure can be simplified.

According to some further aspects of the fastening device according to the invention, the locking bolt further comprises a thread in its front area, wherein at least a section of the threaded front area reaches through the locator bush and the enclosure in the locked position of the fastening device. In particular, the thread in the front area of the locking bolt is configured as an outer thread. Therefore, coupling of other attachments is enabled on the opposite side of the bolt head in relation to the enclosure when mounting these other attachments by means of the threaded front area.

According to some further aspects the fastening device further comprises a nut, which is mounted on the threaded front area of the locking bolt such that the bolt head, the mechanical element, the support structure and the enclosure are pressed together in the locked position of the fastening device. Thus, the fastening device can be pre-tensioned. Furthermore, the nut can bear more load than the retaining element, in particular in the longitudinal axis when supported by the enclosure. As a result, the retaining element can be sized smaller or can be made of a lighter material since it is not under load when the nut is mounted.

According to some further aspects of the fastening device according to the invention, the retaining element is configured as a retaining ring, which is kept under pre-tension for installing the retaining ring on the locking bolt in the unlocked position of the fastening device by the locator bush and which is engaged with the recess of the locking bolt in a locked position of the fastening device. Thus, in the unlocked position the locking bolt can be inserted and slid through the retaining ring without mechanical resistance. Therefore, the fastening device can be easy to install, in particular the locking bolt can be inserted and the fastening device can be locked one-handed. The retaining ring can be configured as an outer retaining ring or an inner retaining ring.

According to some further aspects of the fastening device according to the invention, the retaining element is configured as a sliding block, which slides guidedly towards the recess of the locking bolt, when the locking bolt pushes the locator bush in the longitudinal axis in relation to the enclosure. Thus, the fastening device can have a self-locking function, in particular prior to the locked position of the fastening device, since the retaining element may continuously slide into the recess, wherein the self-locking function is present in an intermediate position, in which the retaining element at least partly protrudes into the recess of the locking bolt.

According to some further aspects of the fastening device according to the invention, the retaining element comprises a pre-tensioned spring for bringing the retaining element into engagement with the recess of the locking bolt, when the locator bush is slid in the locked position of the fastening device and thereby releases the spring.

According to some further aspects of the fastening device according to the invention, the locator bush is configured as a pivoting clamp, which holds the retaining element and reaches into an insertion area of the enclosure for inserting the locking bolt such that the locking bolt triggers the clamp to bring the retaining element into engagement with the recess of the locking bolt, when the locking bolt is inserted into the enclosure in the locked position of the fastening device.

According to some aspects of the fastening system according to the invention, the support structure is configured as a frame of an aircraft, and wherein the mechanical element is configured as a cabin fitting element. Thus, aircraft components are well-tested and mostly standardized.

According to some further aspects of the fastening system according to the invention, the fastening device is installed in an opening of the frame. Thus, a direct load transfer of the mechanical element into the support structure can be enabled. Furthermore, this installation can reduce the space needed for the fastening system.

According to some further aspects the fastening system further comprises an anti-slip inlay between the mechanical element and the support structure for reducing a movement of the mechanical element perpendicular to a longitudinal axis of the fastening device in a locked position of the fastening device. As a result, using the anti-slip inlay can reduce a movement of the mechanical element after installation of the fastening system.

The present invention is explained more specifically below on the basis of the exemplary embodiments indicated in the schematic figures, in which:
- Fig. 1A, 1B: show a schematic illustration of a fastening device for fastening a mechanical element with a support structure according to an embodiment of the invention, wherein Fig. 1A shows the fastening device in an unlocked position and Fig. 1B shows the fastening device in a locked position;
- Fig. 2A, 2B: show a schematic illustration of a fastening system according to an embodiment of the invention, wherein Fig. 2A shows the fastening system in an unlocked position of the fastening device and Fig. 2B shows the fastening system in a locked position of the fastening device;
- Fig. 3: shows a schematic illustration of a fastening system according to Fig. 2A, 2B with a threaded front area of the locking bolt and a nut mounted on the threaded front area;
- Fig. 4A, 4B: show a schematic illustration of an enclosure housing a locator bush according to an embodiment of the invention, wherein Fig. 4A shows the enclosure in a front view and Fig. 4B shows the enclosure in a sectional side view;
- Fig. 5A-5C: show a schematic illustration of a fastening device with a retaining element according to a further embodiment of the invention, wherein Fig. 5A shows the fastening device in an unlocked position, Fig. 5B shows the fastening device in an intermediate position and Fig. 5C shows the fastening device in a locked position;
- Fig. 6A, 6B: show a schematic illustration of a fastening device with a retaining element according to a further embodiment of the invention, wherein Fig. 6A shows the fastening device in an unlocked position and Fig. 6B shows the fastening device in a locked position;
- Fig. 7A, 7B: show a schematic illustration of a fastening device with a locator bush according to a further embodiment of the invention, wherein

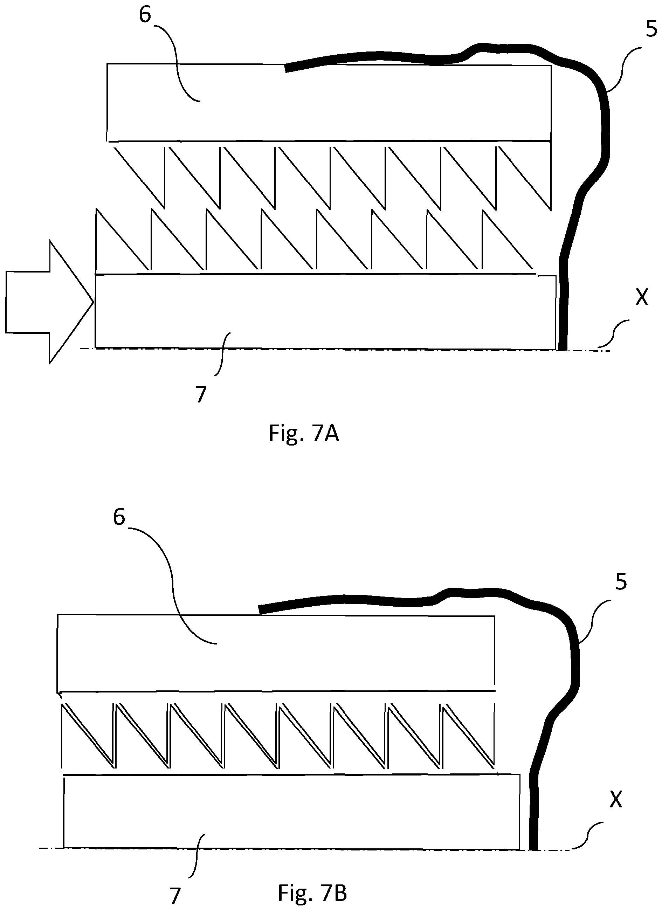

- Fig. 7A: shows the fastening device in an unlocked position and Fig. 7B shows the fastening device in a locked position.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

A retaining ring in the meaning of this application is a fastener that holds components or assemblies onto a shaft or in a housing/bore when installed, typically installed in a groove, for one time use only. Once installed, an exposed portion of the retaining ring acts as a shoulder, which retains the specific component or assembly. For example, a circlip or a snap ring is a type of retaining ring. Retaining rings are typically made from carbon steel, stainless steel or beryllium copper and may feature a variety of finishes for aesthetics and corrosion protection depending on the type of environment in which they are used.

A spring in the meaning of this application is an elastic object that stores mechanical energy. A spring is typically made of spring steel or similar materials. In particular, the spring is designed as a coil spring.

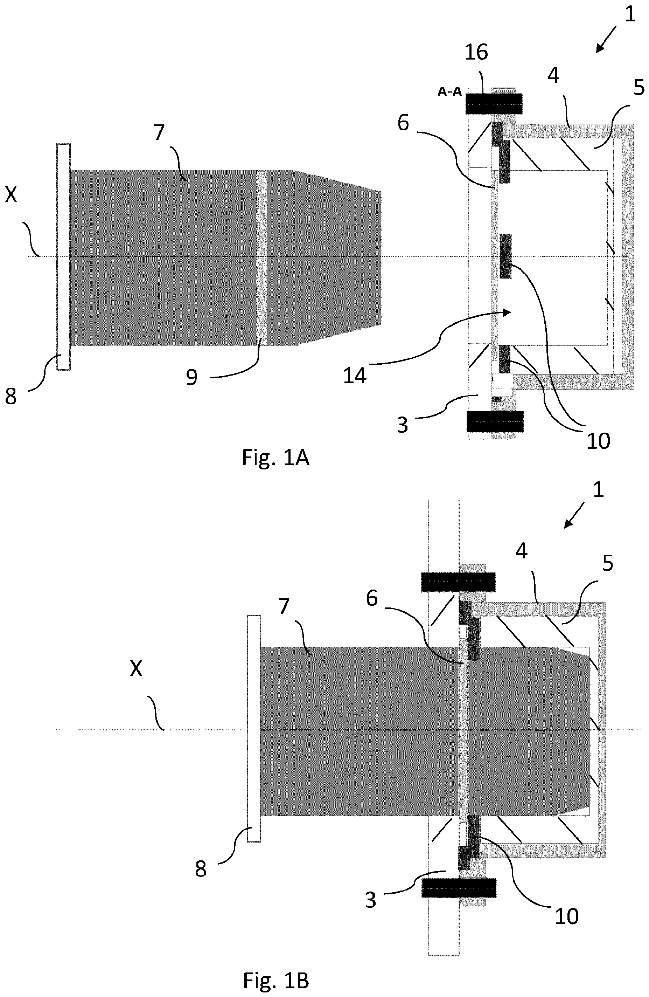

Fig. 1A, 1B show a schematic illustration of a fastening device 1 for fastening a mechanical element 2 with a support structure 3. Thereby, Fig. 1A shows the fastening device 1 in an unlocked position and Fig. 1B shows the fastening device 1 in a locked position.

The fastening device 1 comprises an enclosure 4, a locator bush 5, a retaining element 6, a locking bolt 7 with a recess 9, and a positioning element 10.

The enclosure 4 is exemplarily configured as a hollow cylinder with an opening on a face side of the enclosure 4. Furthermore, the enclosure comprises at least one through-hole for mounting the enclosure to a support structure 3 by a rivet 16 for example.

The locator bush 5 is housed in the enclosure. The locator bush 5 may be configured as a hollow cylinder, wherein the outer diameter of the locator bush 5 corresponds to the inner diameter of the enclosure 4. Although the locator bush 5 according to embodiment Fig. 1A, 1B is configured as a hollow cylinder, the locator bush 5 may also have a cylindrical shape on its outer shell and a cuboid shape on its inner shell of the locator bush 5. In the unlocked position, the locator bush 5 is slidable in the enclosure 4 in a longitudinal direction X of the fastening device 1.

The locking bolt 7 has a bolt head 8. The shell surface of the locking bolt 7 corresponds to the inner shell of the locator bush 5. In particular the locking bolt 7 is configured cylindrical to fit in the hollow cylindrical locator bush 5. Furthermore, the locking bolt comprises a tapered front area.

The positioning element 10 is located at the face side of the enclosure 4. When the enclosure 4 is mounted to the support structure 3, as it is illustrated in Fig. 1A, 1B, the retaining element 6 placed between the support structure 3 and the positioning element 10.

In particular, Fig. 1B shows the fastening device 1 in the locked position, in which the locking bolt 7 reaches through a hole of the support structure 3 and in an insertion area 14 of the locator bush 5. In the locked position, the retaining element 6 has a positively-locking connection with the recess of the locking bolt 7. Furthermore, the locator bush 5 is in an end position, in which the retaining element 6 is free to secure the locking bolt 7.

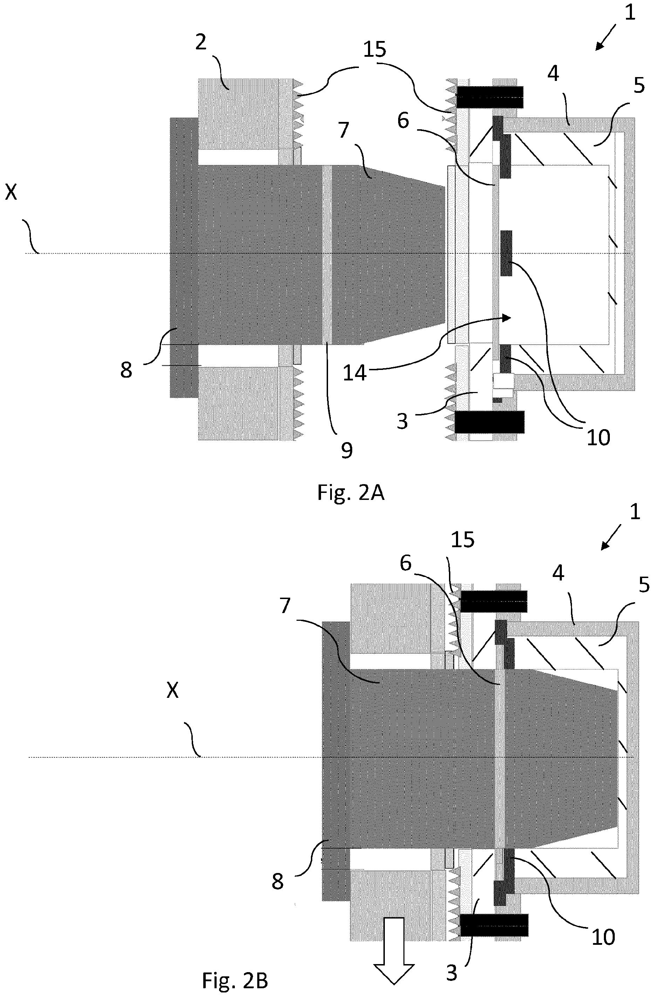

Fig. 2A, 2B show a schematic illustration of a fastening system, wherein Fig. 2A shows the fastening system in an unlocked position of the fastening device 1 and Fig. 2B shows the fastening system in a locked position of the fastening device 1.

The fastening system comprises the fastening device 1 according to the embodiment of Fig. 1A, 1B and further a mechanical element 2 as well as a support structure 3. The mechanical element 2 is configured as a pole with a hole at an end of the pole. The support structure 3 is a frame of an airport, wherein the frame comprises a through-hole.

The fastening device 1 mounts the pole to the frame by a positively-locking connection, as it is illustrated in Fig. 2B. When in the locked position, the fastening device 1 can bear loads, which are charged on the fastening system in the longitudinal direction X and/or perpendicular to the longitudinal direction X (cf. the arrow in Fig. 2B). To compensate inaccuracies the hole of the pole through which the locking bolt passes, has a greater diameter than the shell surface of the locking bolt 7, such that there is a gap between the shell surface and the pole. Therefore, the pole 2 can move in relation to the fastening device 1 perpendicular to the longitudinal axis X.

Optionally, an anti-slip inlay 15 is placed between the pole 2 and the frame 3 of the aircraft for reducing a movement of the pole perpendicular to the longitudinal axis X of the fastening device 1 in the locked position. Exemplarily, the anti-slip inlay 15 comprises two corresponding teeth plates, wherein one of the two teeth plates is attached to each of the pole 2 and the frame 3. In the locked position, the two teeth plates 15 are engaged to one another.

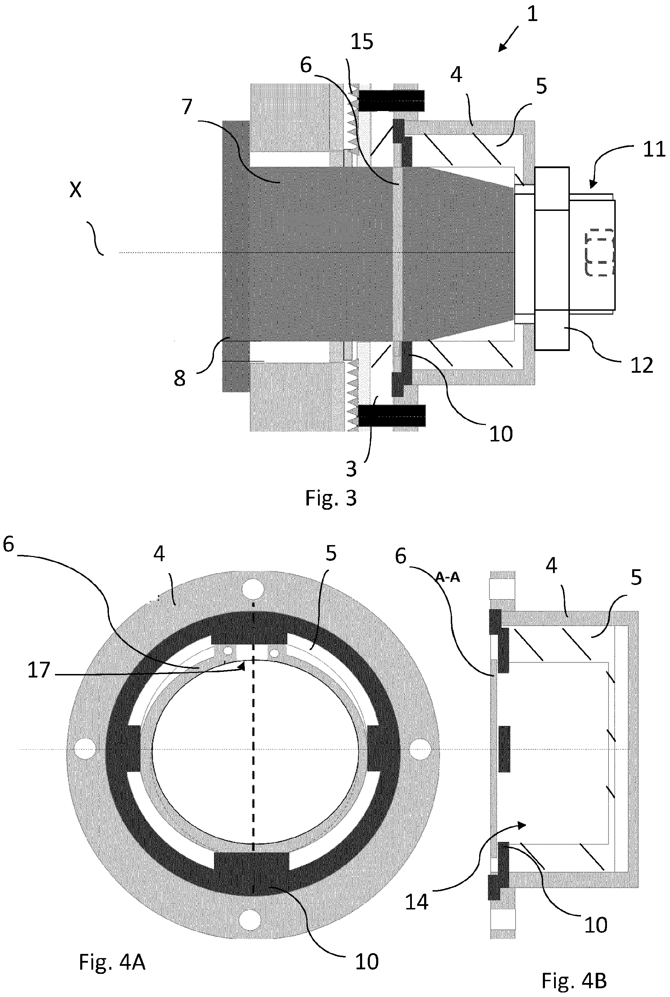

Fig. 3 shows a schematic illustration of a fastening system according to Fig. 2B with a threaded front area 11 of the locking bolt 7 and a nut 12 mounted on the threaded front area 11. The fastening device 1 in Fig. 3 distinguishes from the fastening device of Fig. 2B in that the enclosure 4 and the locator bush 5 each comprise a second opening. The threaded front area 11 reaches through the second openings. The nut 12 is mounted on the threaded front area 11 such that the fastening system is under pre-tension. Thereby, the nut 12 is supported by the enclosure 4, for example.

Fig. 4A, 4B show a schematic illustration of an enclosure 4 housing a locator bush 5 according to an embodiment of the invention, wherein Fig. 4A shows the enclosure 4 in a front view and Fig. 4B shows the enclosure 4 in a sectional side view.

The enclosure comprises four through-holes for mounting the enclosure to the support structure 3. Exemplarily, the retaining element 6 is configured as an outer retaining ring. Furthermore, the positioning element 10 is configured as a ring, which is mounted to the enclosure 4, wherein the ring has protrusions extending from the ring towards the center of the ring 10. The protrusions of the positioning element/ring 10 are dimensioned such that the retaining ring 6 is blocked by the ring 10 in the longitudinal axis.

Further, the locator bush 5 has a nose 17 for example. In the unlocked position of the fastening device 1, the nose 17 spreads the two ends of the outer retaining ring 6 such that the retaining ring 6 is under pre-tension. As long as the fastening device 1 is in the unlocked position the retaining ring 6 is spread by the nose 17 of the locator bush 5 and the locking bolt 7 can slide through the open retaining ring 6 without mechanical resistance. When the locking bolt 7 pushes the slidable locator bush 5 in the locked position of the fastening device 1 the nose 17 removes from the two ends of the retaining ring 6, wherein the retaining ring 6 is kept in place by the positioning ring 10. Without the nose 17 not being placed between the two ends of the retaining ring 6 the retaining ring 6 closes due to the pre-tension.

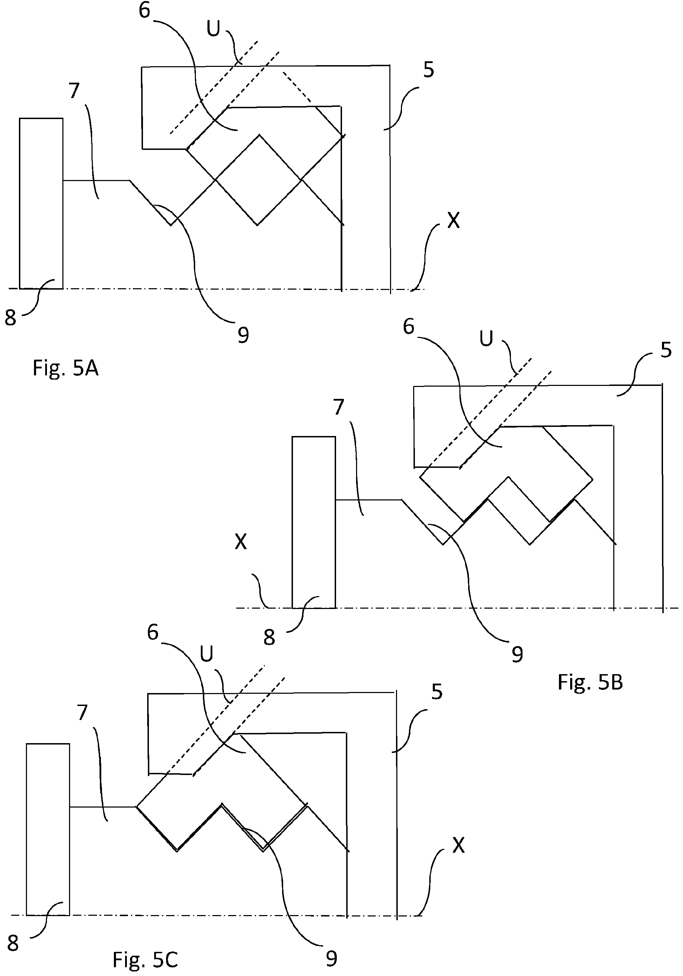

Fig. 5A, 5B, 5C show a schematic illustration of a fastening device 1 with a retaining element 6 according to a further embodiment of the invention. Thereby, Fig. 5A shows the fastening device 1 in an unlocked position, Fig. 5B shows the fastening device 1 in an intermediate position and Fig. 5C shows the fastening device 1 in a locked position.

The fastening device 1 according to the embodiment of Fig. 5A, 5B, 5C substantially corresponds to the fastening device 1 according to the embodiment of Fig. 1A, 1B and distinguishes in that the retaining element 6 is configured as a sliding block.

The sliding block 6 slides guidedly towards the recess 9 of the locking bolt 7, when the locking bolt pushes the locator bush 5 in the longitudinal axis X in relation to the enclosure 4. Fig. 5B shows the fastening device 1 in an intermediate position, in which the sliding block 6 already engages with the recess 9 of the locking bolt 7. The recess 9 has a triangular cross-sectional shape. Furthermore, the locking bolt can have two recesses 9.

Further, the sliding block 6 is guided along a guiding axis U having an angle in a range of about 40° to about 50°, in particular having an angle of about 45°, in relation to the longitudinal axis X.

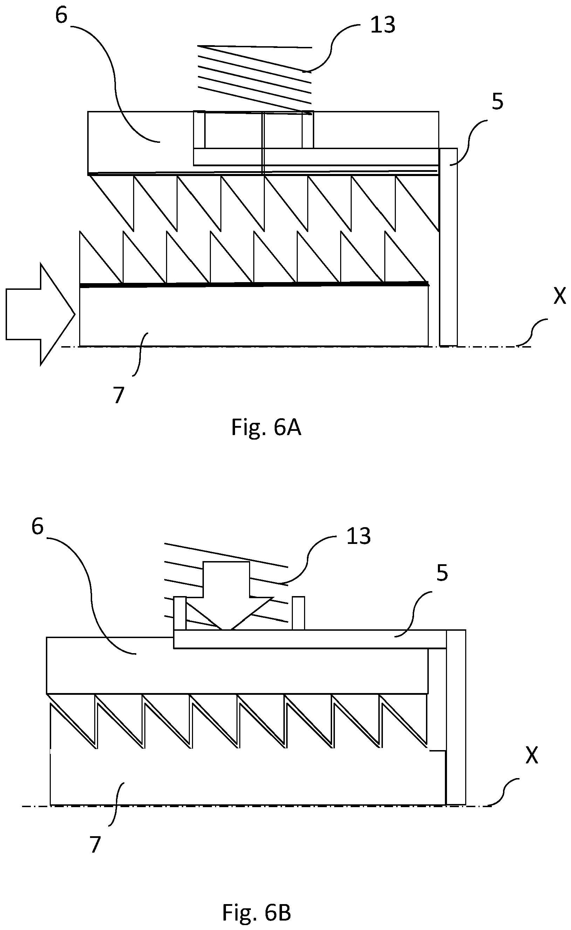

Fig. 6A, 6B show a schematic illustration of a fastening device 1 with a retaining element 6 according to a further embodiment of the invention, wherein Fig. 6A shows the fastening device 1 in an unlocked position and Fig. 6B shows the fastening device 1 in a locked position.

The fastening device 1 according to the embodiment of Fig. 6A, 6B substantially corresponds to the fastening device 1 according to the embodiment of Fig. 1A, 1B and distinguishes in that the retaining element 6 comprises a pre-tensioned spring 13 for bringing the retaining element 6 into engagement with the recess 9 of the locking bolt 7, when the locator bush 5 is slid in the locked position of the fastening device 1 and thereby releases the spring 13.

Further, the retaining element 6 can comprise a plurality of teeth, which are directed to the locking bolt. Therefore, the recess 9 of the locking bolt 7 is shaped conveniently for being engagable with the plurality of teeth of the retaining element 6.

Fig. 7A, 7B show a schematic illustration of a fastening device 1 with a locator bush 5 according to a further embodiment of the invention, wherein Fig. 7A shows the fastening device 1 in an unlocked position and Fig. 7B shows the fastening device 1 in a locked position.

The fastening device 1 according to the embodiment of Fig. 7A, 7B substantially corresponds to the fastening device 1 according to the embodiment of Fig. 1A, 1B and distinguishes in that the locator bush 5 is configured as a pivoting clamp.

The pivoting clamp 5 holds the retaining element 6 and reaches into the insertion area 14 of the enclosure 4 for inserting the locking bolt 7 such that the locking bolt 7 triggers the clamp to bring the retaining element 6 into engagement with the recess 9 of the locking bolt 7, when the locking bolt 7 is inserted into the enclosure 4 in the locked position of the fastening device 1. Thereby, the pivoting clamp can be plastically deformable and can be configured axisymmetric to the longitudinal axis X. Alternatively, the pivoting clamp can be hinged pivotable, wherein one end of the pivoting clamp 5 is mechanically coupled to the retaining element 6 and another end of the pivoting clamp 5 reaches into the insertion area 14 of the enclosure 4.

Further, the retaining element 6 can comprise a plurality of teeth, which are directed to the locking bolt. Therefore, the recess 9 of the locking bolt 7 is shaped conveniently for being engagable with the plurality of teeth of the retaining element 6.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

### Reference list

- 1: fastening device
- 2: mechanical element
- 3: support structure
- 4: enclosure
- 5: locator bush
- 6: retaining element
- 7: locking bolt
- 8: bolt head
- 9: recess
- 10: positioning element
- 11: front area
- 12: nut
- 13: spring
- 14: insertion area
- 15: anti-slip inlay
- 16: rivet
- 17: nose
- X: longitudinal axis
- U: guiding axis

## Claims

1. Fastening device (1) for fastening a mechanical element (2) with a support structure (3), in particular for fastening a cabin fitting element to a frame of an aircraft, the fastening device (1) comprising:
an enclosure (4), which is mountable to the support structure (3);
a locator bush (5), which is housed in the enclosure (4), wherein the locator bush (5) is slidable along a longitudinal axis (X) of the fastening device (1) in relation to the enclosure (4) in an unlocked position of the fastening device (1);
a retaining element (6), which is positioned at least sectionwise around the longitudinal axis (X) in the enclosure (4) and mechanically coupled to the locator bush (5); and
a locking bolt (7), which has a bolt head (8) for mounting the mechanical element (2) between the bolt head (8) and the enclosure (4), wherein the locking bolt (7) is configured to be slidable into the locator bush (5), and wherein the locking bolt (7) has a recess (9), which is located on at least a section of the shell surface of the locking bolt (7) and configured to be positively-locking connectable with the retaining element (6).

2. Fastening device (1) according to claim 1, wherein the retaining element (6) is fixed in relation to the enclosure (4) along the longitudinal axis (X) and movable perpendicular to the longitudinal axis (X).

3. Fastening device (1) according to claim 1 or 2, wherein the locator bush (5) is configured to bring the retaining element (6) into engagement with the recess (9) of the locking bolt (7) in a locked position of the fastening device (1).

4. Fastening device (1) according to one of the preceding claims, wherein the recess (9) of the locking bolt (7) is circumferential around the shell surface of the locking bolt and/or has a rectangular, a triangular or a curved cross-sectional shape.

5. Fastening device (1) according to one of the preceding claims, further comprising a positioning element (10), which is fixed to the enclosure (4) and configured to block a movement of the retaining element (6) along the longitudinal axis (X) in relation to the enclosure (4).

6. Fastening device (1) according to one of the preceding claims, wherein the locking bolt (7) further comprises a thread in its front area (11), wherein at least a section of the threaded front area (11) reaches through the locator bush (5) and the enclosure (4) in the locked position of the fastening device (1).

7. Fastening device (1) according to claim 6, further comprising a nut (12), which is mounted on the threaded front area (11) of the locking bolt (7) such that the bolt head (8), the mechanical element (2), the support structure (3) and the enclosure (4) are pressed together in the locked position of the fastening device (1).

8. Fastening device (1) according to one of the preceding claims, wherein the retaining element (6) is configured as a retaining ring, which is kept under pre-tension for installing the retaining ring on the locking bolt (7) in the unlocked position of the fastening device (1) by the locator bush (5) and which is engaged with the recess (9) of the locking bolt (7) in a locked position of the fastening device (1).

9. Fastening device (1) according to one of the claims 1 to 7, wherein the retaining element (6) is configured as a sliding block, which slides guidedly towards the recess (9) of the locking bolt (7), when the locking bolt pushes the locator bush (5) in the longitudinal axis (X) in relation to the enclosure (4).

10. Fastening device (1) according to one of the claims 1 to 7, wherein the retaining element (6) comprises a pre-tensioned spring (13) for bringing the retaining element (6) into engagement with the recess (9) of the locking bolt (7), when the locator bush (5) is slid in the locked position of the fastening device (1) and thereby releases the spring (13).

11. Fastening device (1) according to one of the claims 1 to 7, wherein the locator bush (5) is configured as a pivoting clamp, which holds the retaining element (6) and reaches into an insertion area (14) of the enclosure (4) for inserting the locking bolt (7) such that the locking bolt triggers the clamp to bring the retaining element (6) into engagement with the recess (9) of the locking bolt (7), when the locking bolt (7) is inserted into the enclosure (4) in the locked position of the fastening device (1).

12. Fastening system, comprising:
a support structure (3);
a fastening device (1) according to one of the preceding claims, wherein the enclosure (4) is mounted to the support structure (3); and
a mechanical element (2), which is positively-locking connected with the fastening device (1).

13. Fastening system according to claim 12, wherein the support structure (3) is configured as a frame of an aircraft, and wherein the mechanical element (2) is configured as a cabin fitting element.

14. Fastening system according to claim 12 or 13, wherein the fastening device (1) is installed in an opening of the frame.

15. Fastening system according to one of the claims 12 to 14, further comprising an anti-slip inlay (15) between the mechanical element (2) and the support structure (3) for reducing a movement of the mechanical element (2) perpendicular to a longitudinal axis (X) of the fastening device (1) in a locked position of the fastening device (1).

## Patentansprüche

1. Befestigungsvorrichtung (1) zum Befestigen eines mechanischen Elements (2) mit einer Tragstruktur (3), insbesondere zum Befestigen eines Kabinenpassungselements an einem Rahmen eines Flugzeugs, wobei die Befestigungsvorrichtung (1) Folgendes umfasst:
ein Gehäuse (4), das an der Tragstruktur (3) montierbar ist;
eine Positionierbuchse (5), die in dem Gehäuse (4) untergebracht ist, wobei die Positionierbuchse (5) in einer entriegelten Stellung der Befestigungsvorrichtung (1) entlang einer Längsachse (X) der Befestigungsvorrichtung (1) relativ zu dem Gehäuse (4) verschiebbar ist;
ein Halteelement (6), das zumindest abschnittsweise um die Längsachse (X) im Gehäuse (4) positioniert und mit der Positionierbuchse (5) mechanisch gekoppelt ist; und
einen Verriegelungsbolzen (7), der einen Bolzenkopf (8) zum Montieren des mechanischen Elements (2) zwischen dem Bolzenkopf (8) und dem Gehäuse (4) aufweist, wobei der Verriegelungsbolzen (7) dazu ausgelegt ist, in die Positionierbuchse (5) schiebbar zu sein und wobei der Verriegelungsbolzen (7) eine Vertiefung (9) aufweist, die sich an zumindest einem Abschnitt der Mantelfläche des Verriegelungsbolzens (7) befindet und dazu ausgelegt ist, formschlüssig mit dem Halteelement (6) verbindbar zu sein.

2. Befestigungsvorrichtung (1) nach Anspruch 1, wobei das Halteelement (6) entlang der Längsachse (X) in Bezug auf das Gehäuse (4) fixiert und senkrecht zur Längsachse (X) beweglich ist.

3. Befestigungsvorrichtung (1) nach Anspruch 1 oder 2, wobei die Positionierbuchse (5) dazu ausgelegt ist, das Halteelement (6) in einer verriegelten Stellung der Befestigungsvorrichtung (1) in Eingriff mit der Vertiefung (9) des Verriegelungsbolzens (7) zu bringen.

4. Befestigungsvorrichtung (1) nach einem der vorhergehenden Ansprüche, wobei die Vertiefung (9) des Verriegelungsbolzens (7) umlaufend um die Mantelfläche des Verriegelungsbolzens ist und/oder eine rechteckige, dreieckige oder eine gekrümmte Querschnittsform aufweist.

5. Befestigungsvorrichtung (1) nach einem der vorhergehenden Ansprüche, ferner umfassend ein Positionierungselement (10), das an dem Gehäuse (4) befestigt ist und dazu ausgelegt ist, eine Bewegung des Halteelements (6) entlang der Längsachse (X) in Bezug auf das Gehäuse (4) zu blockieren.

6. Befestigungsvorrichtung (1) nach einem der vorhergehenden Ansprüche, wobei der Verriegelungsbolzen (7) ferner in seinem vorderen Bereich (11) ein Gewinde aufweist, wobei zumindest ein Abschnitt des mit Gewinde versehenen vorderen Bereichs (11) in der verriegelten Stellung der Befestigungsvorrichtung (1) durch die Positionierbuchse (5) und das Gehäuse (4) reicht.

7. Befestigungsvorrichtung (1) nach Anspruch 6, ferner umfassend eine Mutter (12), die derart an dem mit Gewinde versehenen vorderen Bereich (11) des Verriegelungsbolzens (7) montiert ist, dass der Bolzenkopf (8), das mechanische Element (2), die Tragstruktur (3) und das Gehäuse (4) in der verriegelten Stellung der Befestigungsvorrichtung (1) zusammengedrückt werden.

8. Befestigungsvorrichtung (1) nach einem der vorhergehenden Ansprüche, wobei das Halteelement (6) als ein Haltering ausgebildet ist, der zur Montage des Halterings am Verriegelungsbolzen (7) in der entriegelten Stellung der Befestigungsvorrichtung (1) durch die Positionierbuchse (5) unter Vorspannung gehalten wird und in einer verriegelten Stellung der Befestigungsvorrichtung (1) in Eingriff mit der Vertiefung (9) des Verriegelungsbolzens (7) ist.

9. Befestigungsvorrichtung (1) nach einem der Ansprüche 1 bis 7, wobei das Halteelement (6) als Gleitblock ausgebildet ist, der in Richtung der Vertiefung (9) des Verriegelungsbolzens (7) gleitet, wenn der Verriegelungsbolzen die Positionierbuchse (5) in der Längsachse (X) bezüglich des Gehäuses (4) drückt.

10. Befestigungsvorrichtung (1) nach einem der Ansprüche 1 bis 7, wobei das Halteelement (6) eine vorgespannte Feder (13) umfasst, um das Halteelement (6) in Eingriff mit der Vertiefung (9) des Verriegelungsbolzens (7) zu bringen, wenn die Positionierbuchse (5) in die verriegelte Stellung der Befestigungsvorrichtung (1) geschoben wird und dadurch die Feder (13) freigibt.

11. Befestigungsvorrichtung (1) nach einem der Ansprüche 1 bis 7, wobei die Positionierbuchse (5) als Schwenkklemme ausgebildet ist, die das Halteelement (6) hält und in einen Einsetzbereich (14) des Gehäuses (4) zum Einsetzen des Verriegelungsbolzens (7) reicht, so dass der Verriegelungsbolzen die Klammer auslöst, um das Halteelement (6) in Eingriff mit der Vertiefung (9) des Verriegelungsbolzens (7) zu bringen, wenn der Verriegelungsbolzen (7) in der verriegelten Stellung der Befestigungsvorrichtung (1) in das Gehäuse (4) eingesetzt wird.

12. Befestigungssystem, das Folgendes umfasst:
eine Tragstruktur (3);
eine Befestigungsvorrichtung (1) nach einem der vorhergehenden Ansprüche, wobei das Gehäuse (4) an der Tragstruktur (3) montiert ist; und
ein mechanisches Element (2), das formschlüssig mit der Befestigungsvorrichtung (1) verbunden ist.

13. Befestigungssystem nach Anspruch 12, wobei die Tragstruktur (3) als ein Rahmen eines Flugzeugs ausgelegt ist und wobei das mechanische Element (2) als ein Kabinenpassungselement ausgelegt ist.

14. Befestigungssystem nach Anspruch 12 oder 13, wobei die Befestigungsvorrichtung (1) in einer Öffnung des Rahmens installiert ist.

15. Befestigungssystem nach einem der Ansprüche 12 bis 14, ferner umfassend eine rutschfeste Einlage (15) zwischen dem mechanischen Element (2) und der Tragstruktur (3) zum Reduzieren einer Bewegung des mechanischen Elements (2) senkrecht zu einer Längsachse (X) der Befestigungsvorrichtung (1) in einer verriegelten Stellung der Befestigungsvorrichtung (1).

## Revendications

1. Dispositif de fixation (1) pour fixer un élément mécanique (2) à une structure de support (3), en particulier pour fixer un élément raccord de cabine à un cadre d'un aéronef, le dispositif de fixation (1) comprenant :
une enceinte (4), qui est montable sur la structure de support (3) ;
une douille de positionnement (5), qui est logée dans l'enceinte (4), dans lequel la douille de positionnement (5) peut coulisser le long d'un axe longitudinal (X) du dispositif de fixation (1) relativement à l'enceinte (4) dans une position déverrouillée du dispositif de fixation (1) ;
un élément de retenue (6), qui est positionné au moins en section autour de l'axe longitudinal (X) dans l'enceinte (4) et mécaniquement couplé à la douille de positionnement (5) ; et
un boulon de verrouillage (7), qui a une tête de boulon (8) pour monter l'élément mécanique (2) entre la tête de boulon (8) et l'enceinte (4), dans lequel le boulon de verrouillage (7) est configuré pour pouvoir coulisser dans la douille de positionnement (5), et dans lequel le boulon de verrouillage (7) a un évidement (9), qui est situé sur au moins une section de la surface d'enveloppe du boulon de verrouillage (7) et configuré pour être reliable en verrouillage positif à l'élément de retenue (6).

2. Dispositif de fixation (1) selon la revendication 1, dans lequel l'élément de retenue (6) est fixe relativement à l'enceinte (4) le long de l'axe longitudinal (X) et mobile perpendiculairement à l'axe longitudinal (X).

3. Dispositif de fixation (1) selon la revendication 1 ou 2, dans lequel la douille de positionnement (5) est configurée pour mettre l'élément de retenue (6) en prise avec l'évidement (9) du boulon de verrouillage (7) dans une position verrouillée du dispositif de fixation (1).

4. Dispositif de fixation (1) selon l'une des revendications précédentes, dans lequel l'évidement (9) du boulon de verrouillage (7) est circonférentiel autour de la surface d'enveloppe du boulon de verrouillage et/ou a une forme de section transversale rectangulaire, triangulaire ou incurvée.

5. Dispositif de fixation (1) selon l'une des revendications précédentes, comprenant en outre un élément de positionnement (10), qui est fixé à l'enceinte (4) et configuré pour bloquer un mouvement de l'élément de retenue (6) le long de l'axe longitudinal (X) relativement à l'enceinte (4).

6. Dispositif de fixation (1) selon l'une des revendications précédentes, dans lequel le boulon de verrouillage (7) comprend en outre un filetage dans sa zone avant (11), dans lequel au moins une section de la zone avant filetée (11) arrive à travers la douille de positionnement (5) et l'enceinte (4) dans la position verrouillée du dispositif de fixation (1).

7. Dispositif de fixation (1) selon la revendication 6, comprenant en outre un écrou (12), qui est monté sur la zone avant filetée (11) du boulon de verrouillage (7) de manière telle que la tête de boulon (8), l'élément mécanique (2), la structure de support (3) et l'enceinte (4) sont pressés ensemble dans la position verrouillée du dispositif de fixation (1).

8. Dispositif de fixation (1) selon l'une des revendications précédentes, dans lequel l'élément de retenue (6) est configuré sous forme de bague de retenue, qui est maintenue sous pré-tension pour installation de la bague de retenue sur le boulon de verrouillage (7) dans la position déverrouillée du dispositif de fixation (1) par la douille de positionnement (5) et qui est en prise avec l'évidement (9) du boulon de verrouillage (7) dans une position verrouillée du dispositif de fixation (1).

9. Dispositif de fixation (1) selon l'une des revendications 1 à 7, dans lequel l'élément de retenue (6) est configuré sous forme de bloc coulissant, qui coulisse de façon guidée vers l'évidement (9) du boulon de verrouillage (7), lorsque le boulon de verrouillage pousse la douille de positionnement (5) dans l'axe longitudinal (X) relativement à l'enceinte (4).

10. Dispositif de fixation (1) selon l'une des revendications 1 à 7, dans lequel l'élément de retenue (6) comprend un ressort pré-tendu (13) pour mettre l'élément de retenue (6) en prise avec l'évidement (9) du boulon de verrouillage (7), lorsque la douille de positionnement (5) coulisse dans la position verrouillée du dispositif de fixation (1) et ainsi libère le ressort (13).

11. Dispositif de fixation (1) selon l'une des revendications 1 à 7, dans lequel la douille de positionnement (5) est configurée sous forme de pièce de serrage pivotante, qui tient l'élément de retenue (6) et arrive dans une zone d'insertion (14) de l'enceinte (4) pour l'insertion du boulon de verrouillage (7) de manière telle que le boulon de verrouillage déclenche la pièce de serrage pour mettre l'élément de retenue (6) en prise avec l'évidement (9) du boulon de verrouillage (7), lorsque le boulon de verrouillage (7) est inséré dans l'enceinte (4) dans la position verrouillée du dispositif de fixation (1) .

12. Système de fixation, comprenant :
une structure de support (3) ;
un dispositif de fixation (1) selon l'une des revendications précédentes, dans lequel l'enceinte (4) est montée sur la structure de support (3) ; et
un élément mécanique (2), qui est relié en verrouillage positif au dispositif de fixation (1).

13. Système de fixation selon la revendication 12, dans lequel la structure de support (3) est configurée sous forme de cadre d'un aéronef, et dans lequel l'élément mécanique (2) est configuré sous forme d'élément raccord de cabine.

14. Système de fixation selon la revendication 12 ou 13, dans lequel le dispositif de fixation (1) est installé dans une ouverture du cadre.

15. Système de fixation selon l'une des revendications 12 à 14, comprenant en outre une insertion anti-glissante (15) entre l'élément mécanique (2) et la structure de support (3) pour réduire un mouvement de l'élément mécanique (2) perpendiculaire à un axe longitudinal (X) du dispositif de fixation (1) dans une position verrouillée du dispositif de fixation (1).
